# DEMANDE DE BREVET EUROPEEN

(11) **EP 0 667 550 A1**
(43) Date de publication de la demande: **16.08.1995**
(21) Numéro de dépôt: 95400064.2
(22) Date de dépôt: 13.01.1995
(51) Int. Cl.: G02B 27/00, B60Q 1/52, B60K 35/00

(54) **Dispositif de visualisation d'informations pour conducteur routier**

(30) Priorité: 18.01.1994 FR 9400463
(71) Demandeur: REGIE NATIONALE DES USINES RENAULT S.A., F-92109 Boulogne Billancourt (FR); MAGNETI MARELLI FRANCE, Société Anonyme, F-92002 Nanterre (FR)
(72) Inventeur: Bezard, Jean-Jacques, F-78400 Chatou (FR); Faure, Robert, 92350 Le Plessis Robinson (FR)
(74) Mandataire: Ernst-Schonberg, Michel

(57) **Abrégé**

Dispositif de visualisation d'informations pour conducteur routier, destiné à attirer l'attention de celui-ci sur un secteur particulier de la scène routière, caractérisé en ce qu'il comporte un système optique permettant de présenter au conducteur une image virtuelle réduite (4) de la scène routière (5) enrichie d'un signal lumineux (15).

## Description

La présente invention se rapporte au domaine de l'aide à la conduite des véhicules routiers. Plus précisément, elle concerne un dispositif destiné à faciliter la perception d'informations d'aide à la conduite ou d'aide à la navigation par le conducteur d'un véhicule, sans détourner son attention de la scène routière.

De nombreux dispositifs de visualisation d'informations pour conducteurs routiers ont déjà été proposés. On peut se référer par exemple aux documents US-A-4.729.634, EP-A-0.420.228 et EP-A-0.450.553.

Le document US-A-4.729.634 se préoccupe essentiellement d'agrandir le champ de vision instantané de l'imageur et projette l'image virtuelle de celui-ci à l'infini.

Le document EP-A-0.420.228 enseigne un dispositif de visualisation dans lequel le pare-brise présente deux faces extérieures non parallèles pour éviter la génération d'images parasites.

Le document EP-A-0.450.553 enseigne un dispositif de visualisation comprenant une optique à base de miroirs dans laquelle un miroir est mobile en fonction de la vitesse du véhicule, afin de modifier l'agrandissement de l'image virtuelle de l'imageur et la position de cette image virtuelle en fonction de la vitesse du véhicule.

Les dispositifs connus ne permettent pas au conducteur de conserver en toute circonstance une vision d'ensemble de la scène routière lorsqu'il consulte les informations affichées.

La présente invention a pour but de présenter au conducteur des informations lisibles, sans qu'il quitte des yeux la scène routière.

Elle propose à cet effet un dispositif de visualisation d'informations pour conducteur routier, destiné à attirer l'attention de celui-ci sur un secteur particulier de la scène routière. Ce dispositif est caractérisé en ce qu'il comporte un système optique permettant de présenter au conducteur une image réduite de la scène routière enrichie d'un signal lumineux.

L'invention vise également à superposer l'image de la scène routière obtenue à une deuxième image, fournie par un générateur d'image auxiliaire.

Elle propose à cet effet de munir le système optique du dispositif, d'un élément semi-réfléchissant assurant le mélange du signal lumineux et de l'image virtuelle de la scène routière.

Selon un mode de réalisation de l'invention, l'image virtuelle et le signal lumineux sont dans le même plan.

Selon un mode de réalisation de l'invention, le générateur d'image virtuelle réduite comporte un système optique divergent.

Selon un mode de réalisation de l'invention, le système optique divergent est choisi dans le groupe comprenant les lentilles divergentes et les réflecteurs divergents.

Selon un mode de réalisation de l'invention, le système optique comporte au moins une lentille divergente et un prisme.

Selon un mode de réalisation de l'invention, la lentille divergente et le prisme ne forment qu'une seule pièce.

Selon un mode de réalisation de l'invention, l'élément semi-réfléchissant est un miroir plan qui intercepte les rayons lumineux issus de l'image virtuelle et d'un générateur d'images.

Selon un mode de réalisation de l'invention, les deux faces du miroir plan semi-réfléchissant ne sont pas parallèles.

Selon un mode de réalisation de l'invention, l'élément semi-réfléchissant est un miroir convexe interceptant les rayons lumineux issus de l'image virtuelle et d'un générateur d'images.

Selon un mode de réalisation de l'invention, l'élément semi-réfléchissant est constitué par une face du prisme.

Selon un mode de réalisation de l'invention, le générateur d'images est placé sous le contrôle d'un système d'aide à la conduite embarqué.

Selon un mode de réalisation de l'invention, le signal lumineux désigne au conducteur une cible.

Selon un mode de réalisation de l'invention, le conducteur perçoit l'image réduite de la scène routière et le signal lumineux sur la pupille d'un viseur intégré à son poste de conduite.

D'autres caractéristiques et avantages de l'invention apparaîtront clairement à la lecture de la description suivante de deux modes de réalisation de celle-ci, en liaison avec les dessins annexés sur lesquels :
- les figures 1, 2 et 3 illustrent le système optique utilisé sur l'invention pour restituer au conducteur une image réduite de la scène routière.
- la figure 4 regroupe les moyens mis en oeuvre conformément à un premier mode de réalisation de l'invention, pour réduire la scène routière et superposer des informations à l'image virtuelle de celle-ci,
- les figures 5A et 5B se rapportent au mélangeur de la figure 4.
- les figures 6 et 7 ont pour objet deux variantes de la figure 4,
- la figure 8 illustre l'intégration du premier mode de réalisation de l'invention dans une planche de bord,
- la figure 9 reproduit l'image perçue par le conducteur en cas d'application du dispositif proposé à la détection d'une cible, et
- les figures 10, 11A et 11B se rapportent à un second mode de réalisation de l'invention.

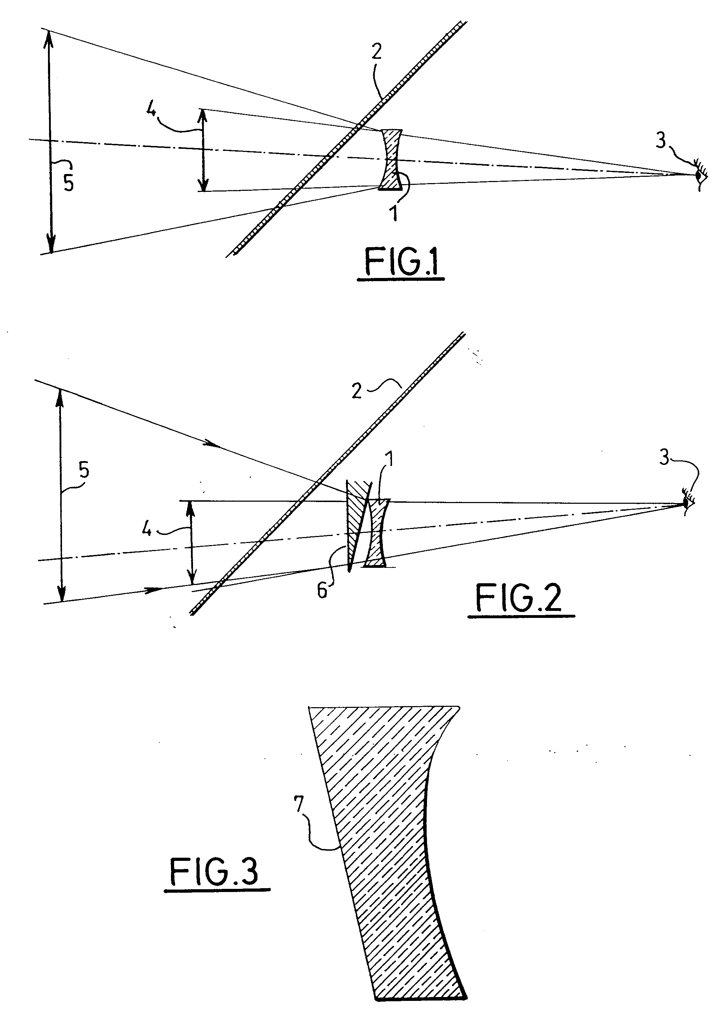

Sur la figure 1, on a représenté de façon schématique une lentille divergente 1 placée entre le pare-brise 2 d'un véhicule et l'oeil 3 de son conducteur. L'emplacement relatif de la lentille 1, de l'oeil 3 et de la scène routière 5 est tel que la lentille forme pour l'oeil une image virtuelle réduite 4 de la scène routière 5 sensiblement dans son plan focal. En choisissant une lentille appropriée et en plaçant celle-ci à proximité du pare-brise 2, il est en effet possible d'obtenir une image virtuelle 4 à environ 1,5 m, de l'oeil 3 du conducteur, donc de présenter à celui-ci une image réduite 4 de la scène routière qu'il peut observer sans effort d'accommodation particulier, ni détourner son attention de la chaussée.

L'utilisation d'un générateur d'image virtuelle réduite de la scène routière constitue une caractéristique essentielle de l'invention.

Une telle image virtuelle réduite est obtenue avantageusement à l'aide d'une optique divergente, de préférence à base d'une lentille divergente ou d'un miroir divergent (convexe).

Conformément à la figure 2, la lentille 1 peut avantageusement être associée à un prisme 6 à arête horizontale, destiné à dévier le faisceau lumineux de la scène routière 5 vers la lentille 1. Cette disposition permet d'obtenir le même résultat que précédemment, sans placer le système optique au centre du pare-brise 2.

La figure 3 propose une mesure applicable au système optique illustré par la figure 2. Cette mesure, consiste à former la lentille et le prisme en une seule pièce 7 remplissant les deux fonctions. Elle permet de supprimer les images parasites pouvant résulter du passage des rayons lumineux par deux dioptres successifs entre la lentille et le prisme. La pièce 7 pourra avantageusement être moulée dans une matière thermoplastique telle que le polyméthacrylate de méthyle (plexiglass).

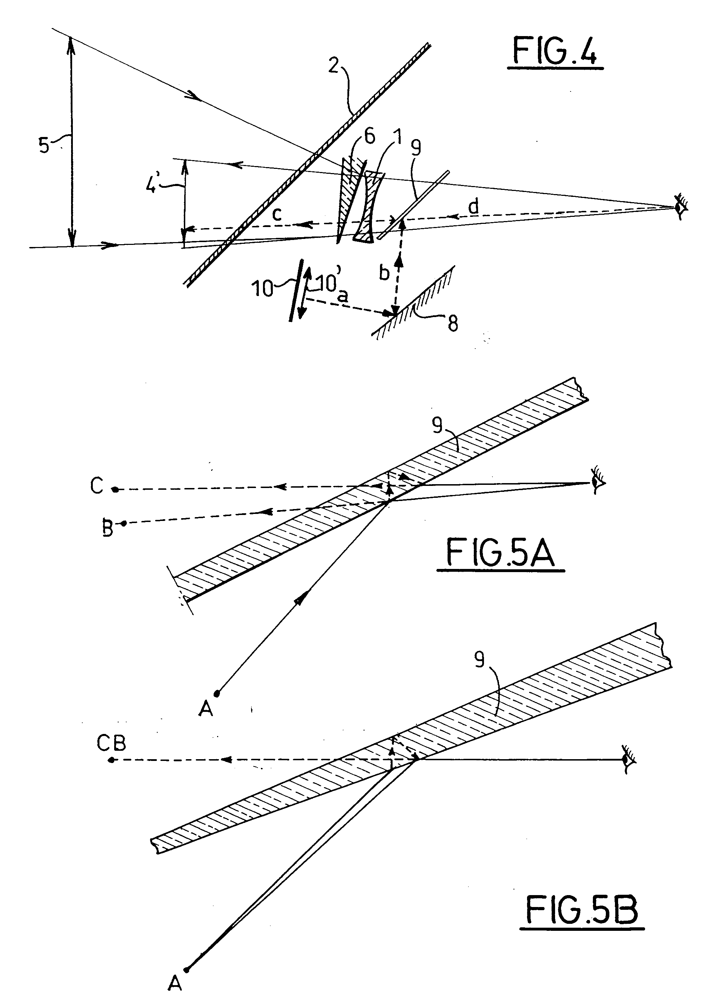

Sur la figure 4, le système optique de la figure 2 est associé à un générateur d'images 10, à un premier miroir 8 placé sur le trajet des rayons lumineux émis par celui-ci, et à un second miroir 9, semi-réfléchissant, assurant le mélange de la scène réduite 4 et de l'image 10' émise par le générateur 10. En plaçant le miroir semi-réfléchissant 9 à une distance c du plan focal de la lentille 1, égale à la somme de la distance a séparant le générateur 10 du premier miroir 8 et de la distance b séparant les deux miroirs 8, 9, il est possible de superposer dans le plan focal de la lentille 1, l'image réduite 4 de la scène routière et l'image 10' affichée sur le générateur d'images 10. Le conducteur dispose ainsi d'une image virtuelle réduite 4 de la scène routière 5 enrichie, dans son plan, de signaux lumineux.

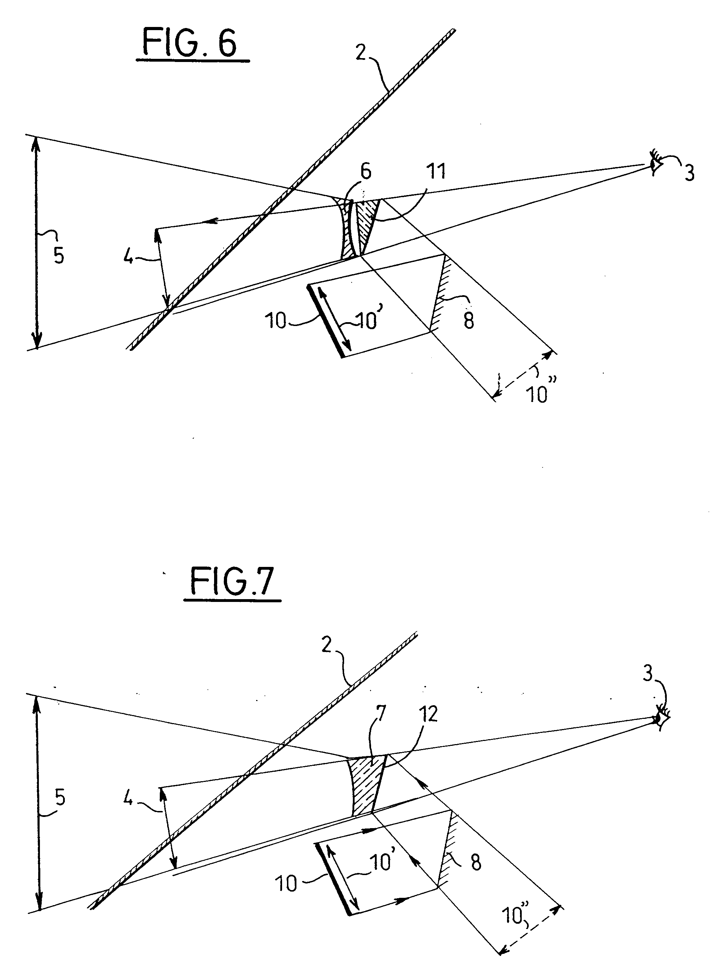

Comme le met en évidence la figure 5A, si le miroir transparent 9 est un miroir à faces parallèles, l'image de chaque joint lumineux A émis par le générateur 10 sera dédoublée (B et C) par sa réflexion successive sur chacune des faces du miroir 9.

La disposition illustrée par la figure 5B, consistant à utiliser un miroir à faces non parallèles permet d'aligner les deux images B et C du point A avec l'oeil du conducteur, donc d'obtenir une image particulièrement nette des signaux correspondants.

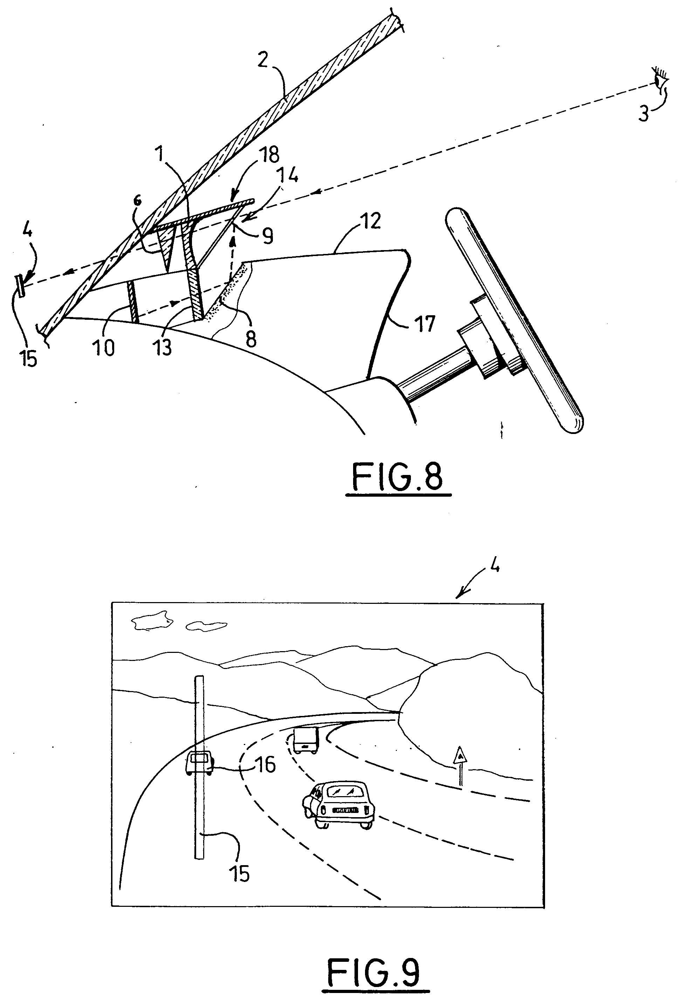

La figure 6 propose une variante de la figure 4, selon laquelle le second miroir est supprimé. Il est en effet possible d'obtenir le même résultat que précédemment en traitant la face 11 du prisme 6 recevant les faisceaux lumineux du générateur 10 pour qu'elle soit semi-réfléchissante. Il en va de même pour la face 12, pièce unique 7 de la figure 3 remplissant les fonctions de la lentille divergente et du prisme (cf figure 7).

La figure 8 illustre l'intégration du dispositif de visualisation d'informations qui vient d'être décrit, sur un poste de conduite de véhicule automobile. Conformément à cet exemple d'intégration, dépourvu de tout caractère limitatif, il est prévu de rassembler le système optique utilisé, à l'intérieur d'un viseur 18 monté sur la planche de bord 12 du véhicule. Le viseur 18 regroupe la lentille 1, le prisme 6, le miroir semi-réfléchissant 9, ainsi que le générateur d'image 10, le premier miroir 8 et une lentille convergente 13 placée sur le trajet du faisceau lumineux émis par le générateur 10. Au travers de la pupille 14 du viseur 11, le conducteur dispose donc d'une image 4 composée d'une image virtuelle réduite 4 de la scène routière, enrichie, dans son plan, de signaux lumineux.

L'invention trouve une application particulièrement avantageuse, mais non exclusive dans la mise en oeuvre de fonctions d'aide à la conduite, telles que le contrôle de distance entre véhicules roulant sur la même file, le suivi des lignes blanches, ou tout autre système visant à l'amélioration de la sécurité routière et/ou de la visibilité.

Elle permet en effet de superposer en permanence à une image complète de la scène routière des informations visuelles synthétiques élaborées à partir :
- de mesures recueillies par des capteurs d'environnement (télémètre, caméra, capteur d'état de la chaussée et capteurs de perturbations atmosphériques) ou collectées par des capteurs de signaux représentatifs de paramètres de fonctionnement, tels que l'angle volant, la vitesse du véhicule, l'accélération, etc...),
- de systèmes sophistiqués de localisation de guidage ou de détection d'obstacles, de supports cartographiques mémorisés, ou
- de données échangées avec l'infrastructure (balises, système GPS).

Lorsque le générateur d'images 10 est placé sous le contrôle d'un système de détection d'obstacles embarqué, la présente invention permet de signaler au conducteur un ou plusieurs obstacles particulièrement dangereux. Si le véhicule est équipé d'un système de contrôle de distance entre véhicules roulant sur la même file ou sur des files adjacentes, le dispositif proposé permet de lui indiquer de façon précise la cible retenue.

Conformément à la figure 9, le conducteur peut percevoir sur la pupille 14 de son viseur 18 un index lumineux 15 lui désignant la cible ou l'obstacle 16 retenu.

Sans sortir du cadre de l'invention, il est bien entendu possible d'envisager d'autres types d'intégration que celui qui vient d'être décrit. Le générateur d'images 10 pourra être constitué par tout afficheur lumineux tel qu'un écran cathodique, un afficheur L.C.D. (Liquid Cristal Display) une lampe, un afficheur V.F.D. (Vacum Fluorescent Display). Il est par ailleurs possible d'obtenir un résultat analogue à celui qui est illustré par la figure 9 en remplaçant simplement l'afficheur lumineux mentionné ci-dessus par une aiguille mobile, déplacée par un moteur électrique en réponse aux ordres d'un système de commande.

Enfin dans le cadre de l'application "détection d'obstacles" évoquée plus haut, on peut prévoir de "qualifier" l'objet détecté pour graduer le danger, sur la base de paramètre tels que sa vitesse relative, sa distance, ou sa position transversale. Cette "qualification" sera mise en oeuvre de façon simple et directement exploitable par le conducteur en introduisant dans la commande de l'affichage des variations de couleur, de taille ou de brillance de l'index, l'affichage intermittent, etc...

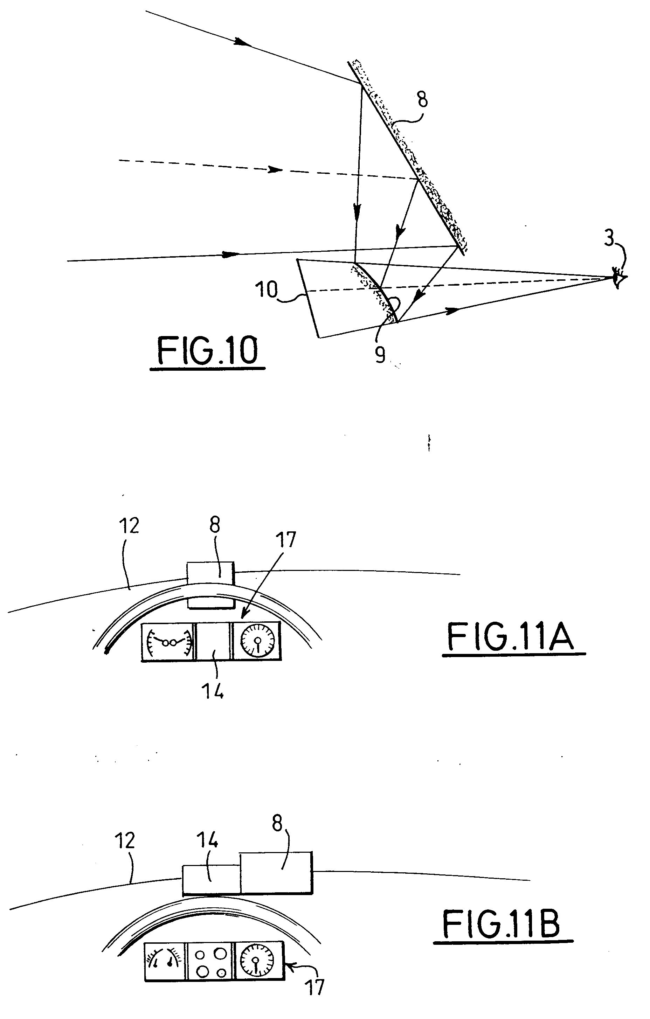

La figure 10 illustre un second mode de réalisation de l'invention, selon lequel le miroir réfléchissant 9' remplissant la fonction de mélangeur d'images est convexe. Dans ce cas, le premier miroir 8 peut avantageusement être placé sur le trajet du faisceau lumineux provenant de la scène routière (après son passage au travers de la lentille divergente et du prisme non représentés sur la figure 10).

Les figures 11 A et 11 B proposent à titre d'exemples non limitatifs, deux variantes d'intégration du dispositif de visualisation d'informations de la figure 10, sur le poste de conduite d'un véhicule. La pupille 14 du viseur peut par exemple être placée dans le tableau de bord 17 (cf fig. 11 A). Cette disposition suppose toutefois d'orienter de façon appropriée le générateur 10, le miroir semi-réfléchissant 9, ainsi que le premier miroir 8 dont on aperçoit la face opaque au-dessus de la planche de bord 12. Comme le montre la figure 11 B, il est également possible de placer la pupille 14 en d'autres endroits du poste de conduite, par exemple à côté du miroir 8.

En conclusion, le dispositif de visualisation proposé par l'invention permet au conducteur de disposer, dans son champ habituel de vision d'un viseur au travers duquel il pourra observer dans les meilleures conditions de lisibilité l'emplacement précis d'un signal lumineux sur la scène routière, sans détourner à aucun instant son attention de celle-ci. Comme indiqué plus haut, les applications du dispositif de visualisation proposé par l'invention sont nombreuses, notamment dans le domaine de l'aide à la conduite.

L'utilisation d'un générateur d'image virtuelle réduite de la scène routière à base de lentilles ou de miroirs divergents permet d'obtenir une profondeur de champ appréciable qui ne peut être obtenue généralement à l'aide d'afficheurs statiques.

## Revendications

**[1]** Dispositif de visualisation d'informations pour conducteur routier, destiné à attirer l'attention de celui-ci sur un secteur particulier de la scène routière, caractérisé en ce qu'il comporte un système optique permettant de présenter au conducteur une image virtuelle réduite (4) de la scène routière (5) enrichie d'un signal lumineux (15).

**[2]** Dispositif de visualisation d'informations selon la revendication 1, caractérisé en ce qu'il comporte un élément semi-réfléchissant (9, 9', 11, 12) assurant le mélange du signal lumineux (15) et de l'image virtuelle (4) de la scène routière.

**[3]** Dispositif de visulation d'informations selon les revendications 1 ou 2, caractérisé en ce que l'image virtuelle (4) et le signal lumineux (15) sont dans le même plan.

**[4]** Dispositif de visualisation d'informations selon l'une des revendications 1 à 3, caractérisé en ce que le générateur d'image virtuelle réduite comporte un système optique divergent.

**[5]** Dispositif de visualisation d'informations selon la revendication 4, caractérisé en ce que le système optique divergent est choisi dans le groupe comprenant les lentilles divergentes et les réflecteurs divergents.

**[6]** Dispositif de visualisation d'informations selon la revendication 4 ou 5, caractérisé en ce que le système optique comporte au moins une lentille divergente (1) et un prisme (6).

**[7]** Dispositif de visualisation d'informations selon la revendication 6, caractérisé en ce que la lentille divergente (1) et le prisme ne forment qu'une seule pièce (7).

**[8]** Dispositif de visualisation d'informations selon l'une des revendications 2 à 7, caractérisé en ce que l'élément semi-réfléchissant est un miroir plan (9) qui intercepte les rayons lumineux issus de l'image virtuelle (4) et d'un générateur d'image (10).

**[9]** Dispositif de visualisation d'informations selon la revendication 8, caractérisé en ce que les deux faces du miroir plan semi-réfléchissant (9) ne sont pas parallèles.

**[10]** Dispositif de visualisation d'informations selon les revendications 2 à 7, caractérisé en ce que l'élément semi-réfléchissant (9') est un miroir convexe interceptant les rayons lumineux issus de l'image virtuelle (4) et d'un générateur d'images (10).

**[11]** Dispositif de visualisation d'informations selon les revendications 2 à 7, caractérisé en ce que l'élément semi-réfléchissant est constitué par une face (11, 12) du prisme (6, 7).

**[12]** Dispositif de visualisation d'informations selon l'une des revendications précédentes, caractérisé en ce que le générateur d'images (10) est placé sous le contrôle d'un système d'aide à la conduite embarqué.

**[13]** Dispositif de visualisation d'informations selon l'une quelconque des revendications précédentes, caractérisé en ce que le signal lumineux (15) désigne au conducteur une cible (16).

**[14]** Dispositif de visualisation d'informations selon l'une quelconque des revendications précédentes, caractérisé en ce que conducteur perçoit l'image virtuelle (4) de la scène routière et le signal lumineux (15) sur la pupille (14) d'un viseur (18) intégré à son poste de conduite.
